# EUROPEAN PATENT SPECIFICATION

(11) **EP 0 433 547 B1**
(45) Date of publication and mention of the grant of the patent: **28.07.1993**
(21) Application number: 90115070.6
(22) Date of filing: 06.08.1990
(51) Int. Cl.: C10J 3/20, C10J 3/08, C10J 3/26, C10J 3/66

(54) **Apparatus to gasify solid fuels**
Vorrichtung zum Vergasen fester Brennstoffe
Appareil pour gazéifier des combustibles solides

(30) Priority: 29.11.1989 IT 8351989
(43) Date of publication of application: 26.06.1991
(73) Proprietor: SAS GINO TOMADINI & C., I-33170 Pordenone (IT)
(72) Inventor: Tomadini, Gino, I-33170 Pordenone (IT)
(74) Representative: Petraz, Gilberto Luigi

(56) References cited:
- DE-A- 2 747 571
- GB-A- 2 003 589
- GB-A- 2 116 201
- GB-A- 2 183 249
- US-A- 4 530 702

## Description

This invention concerns an apparatus to gasify solid fuels as set forth in the main claim. To be more exact, the invention concerns a gasification apparatus suitable to produce fuel gas by the simultaneous application of a direct flame and of a downward flame to the material to be gasified.

The apparatus of the invention employs operational methods which do not pollute the outside environment and are more remunerative from the production point of view.

The apparatus is used in particular for the gasification of solid urban wastes and generally for the gasification of low-cost solid products such as wood waste, wood chips, biomasses in general, tyres, peat, lignite, coal and other materials.

The state of the art covers a plurality of apparatuses to produce gas from solid fuels; these apparatuses have various types of conformations and working principles.

Particular attention is paid to the problems of environmental pollution, since the process to produce the gas generates products which are hard to dispose of or detrimental owing to their toxicity; the first of these categories includes the various types of tars, while the second may comprise dioxin; other types of products may have undesirable characteristics; for instance, they may be evil-smelling, such as creosote or the like.

US-A-4,175,929 discloses a coal gasification process whereby all the pollutants contained in the producer gas are substantially eliminated. To this end the producer gas is passed through stages of water scrubbing and condensation which purify it. Devices are provided for the recovery of energy and for the recirculation of fluids which can be reused in the operation of the the gas producer.

DE-A-3.523.765 concerns a process and a device to gasify carbonaceous material, whereby the gas distilled at a low temperature is sent to an oxidation zone free of solid materials where it is almost completely burnt.

FR-A-7.830.787 concerns a process and a device to produce gas from wood, which use the combined principle of production of gas by a gas producer and production of water gas by means of air from steam and tar vapour.

WO-A-8.002.563 discloses a process for the complete gasification of carbonaceous materials by thorough pyrolysis, whereas WO-A-8.100.112 discloses a process and plant for the gasification of solid fuels, whereby the gasification is obtained in three separate stages.

DE-A-3.327.203 concerns a process and apparatus for the gasification of solid wastes, whereby the gas leaving a distillation zone as a gas distilled with steam is returned to the melting zone to be burnt at least partly.

The processes and devices of the state of the art overcome a plurality of problems but still do not enable satisfactory yields of energy to be obtained as are required in the various means of usage in the gasifications plants.

DE-A-2.747.571 discloses a method for the continuous production of a reduction gas containing carbon monoxide and hydrogen, into which in the upper zone of a reactor there is introduced a solid fuel which contains carbon and is heated in that upper zone and brought to an intermediate zone of the reactor.

A combustion-supporting gas is fed selectively into the intermediate zone at points distant from each other so as to gasify the fuel and to maintain a gasification temperature sufficient to free volatile hydrocarbons through cracking of the fuel and to oxidize partly the carbon in the fuel.

Moreover, steam is fed selectively into the intermediate zone at points distant from each other so as to keep the gasification temperature below the melting point of the solid fuel containing carbon and to allow the steam to react with the carbon of the fuel so as to form carbon monoxide and hydrogen.

Furthermore, the partly oxidized fuel, from which the volatile components are expelled, is brought to a lower zone of the reactor.

A combustion-supporting gas and steam are fed into the lower zone so as to generate carbon monoxide and hydrogen by reaction with the carbon contained in the fuel, while the ash is removed from the lower zone.

The reduction gas produced in the intermediate and lower zones is discharged to the exterior.

This method can be used only by starting with a good quality solid fuel containing carbon and cannot be employed by using low cost products or wastes.

US 4,530,720 provides for the gasification of biomasses and can be applied also to solid fuel products of a low cost. It teaches a crude, elementary technology, and its teaching cannot be combined with others except with a complex and articulated mental process that leads to a new view of the concept of gasification of low grade products.

The present applicant has designed, tested and embodied a gasification apparatus able to overcome the problems of the state of the art.

The invention is set forth in the main claim, while the dependent claims describe various features of the invention.

The gasification apparatus according to the invention is a gas producer in which two types of flame, a direct flame and a downward flame, are employed in the furnace. There may be a plurality of flames of each type.

The zone of aspiration of the fuel gases produced or of emission of combustion supporting air is located advantageously in an intermediate portion of the furnace between the positions of the two types of flame.

A device to melt the non-fuel parts of the wastes, such as glass, metallic slags, etc. may be provided at the bottom of the gas producer, especially in the case of gasification of solid urban waste.

A normal zone for collection and discharge of the ashes produced in the gasification may also be provided.

The fuel gases produced by gasification of the material inside the gas producer include gas from pyrolysis and products of distillation, which can be condensed and returned to the combustion zone of the furnace of the gas producer, where they are burned.

To that combustion zone may also be sent the volatile polluting products still present in the fuel gases leaving the gas producer or in the gases leaving an apparatus connected to the gas producer, such as a vapour condenser, for instance.

The gasification apparatus of the invention may be connected advantageously to energy production plants, heating plants, motor transport stations and many other users.

These and other special features of theinvention will be made clearer in the description that follows.

The attached figures, which are given as a non-restrictive example, show the following:
- Fig.1: gives a diagram of an apparatus according to the invention;
- Fig.2: is a diagram of another form of embodiment of the invention;
- Fig.3: is a diagram of yet another form of embodiment of the invention.

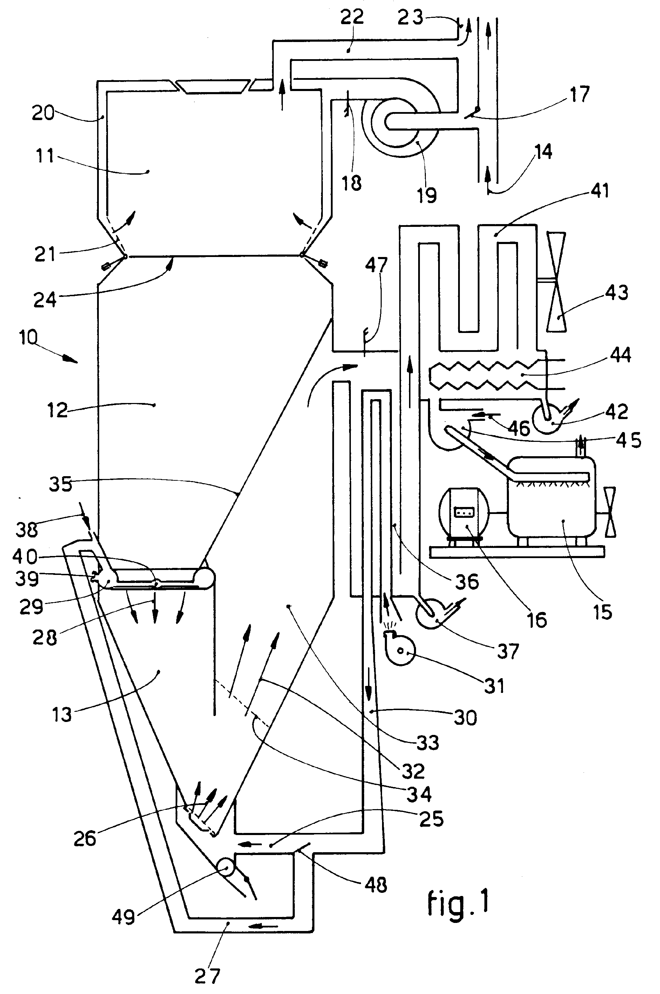

In Fig.1 a gas producer 10 consists substantially of a pre-charging and drying silo 11, a carbonisation and gasification silo 12 and a furnace 13.

The pre-charging silo 11 contains a stock of fuel material and is equipped advantageously with equipment to dry the excess water in the stock.

The drying can be carried out by using heat recovered from the gas producer 10 or, as in this case, by using discharged gases arriving, for instance, along a duct 14 from a motor 15 that drives a generator 16.

These discharged gases are aspirated through a valve 17 operated by a thermostat 18, by means of a fan 19 of a centrifugal type, for instance, so as to be conveyed into an air space 20 in the wall of the pre-charging silo 11. This air space 20 is insulated advantageously on the outer side of the silo 11.

The discharged gases are brought into the pre-charging silo 11 through grills 21 and leave through a conduit 22 in the top of the silo after being cooled and impregnated with moisture removed from the fuel material.

The excess fraction of the discharged gases leaves through an outlet 23 and may undergo thereafter a possible condensation to recover water which can be used for the gas producer 10 and for recovery of energy.

The reusable fraction of these gases is aspirated by the fan 19 through the valve 17 so as to be mixed with hot discharge gases arriving through the duct 14, and in this way a condition of temperature at the thermostat 18 is restored which is suitable for the drying treatment in the pre-charging silo 11.

In this way the mixture of the discharged gases from the motor 15 with the recirculation gases leaving through the conduit 22 has characteristics that do not support combustion and therefore any possibility of self-ignition of the fuels being dried is prevented.

A gate valve 24, which may be powered, is provided between the pre-charging silo 11 and gasification silo 12 so as to enable the gas producer 10 to work continuously.

The solid fuels pass from the carbonisation or coking and gasification silo 12 into the furnace 13 so as to undergo combustion.

Air for the direct flame 26, namely the upwards burning flame fed with combustion-supporting air, is brought into the combustion furnace 13 by means of a duct 25.

Likewise, air for the downward burning flame 28, namely the downward flame fed with combustion-supporting air, is brought into the furnace 13 by means of a duct 27 and manifold 29.

This combustion-supporting air reaches the gas producer 10 through a delivery conduit 30, at the inlet of which the air is suitably moistened, for instance, by a water sprayer 31.

A valve 48 to regulate the flow of air for the direct flame 26 and the downward flame 28 is positioned at the end of the delivery conduit 30.

The fuel gases leaving the furnace 13 in the direction of the arrow 32 pass into a transfer chamber 33, which has also decantation functions for solid particles in the flow of the gases. This transfer chamber 33 is limited at its lower end by a grating 34 that has the functions of containing uniformly the carbonised material in the furnace 13 and of providing a uniform flow of the gases leaving the furnace 13.

The recovery of the fuel gases in the direction 32 takes place substantially in an intermediate position in the furnace 13 between the direct flame 26 and downward flame 28. The departing fuel gases contact a wall 35 of the gasification silo 12, thus providing a supply of heat towards the inside of the silo 12, this heat being useful for the purposes of pyrolysis, distillation and carbonisation or coking of the fuel products contained therein.

The fuel gases leaving the transfer chamber 33 pass advantageously into a heat exchanger 36, in which they yield heat to the combustion-supporting air entering the gas producer 10; this air therefore is pre-heated when it reaches the furnace 13.

The condensation products collected by the heat exchanger 36 are sent by a pump 37 to the inlet 38 of the manifold 29, where they are re-evaporated by the pre-heated combustion-supporting air coming from the duct 27.

Fig.1 references generically with 39 an opening for ignition and control of the flame and with 40 a hole for the actual ignition.

The fuel gases pass from the heat exchanger 36 advantageously to a cooling battery 41, consisting, for instance, of a set of cyclones outwardly cooled by an interpsace containing a recirculation of water, where a further separation takes place by a possibly fractional condensation of different substances. The condensation products are also collected by a pump 42 and sent through the inlet 38 into the manifold 29.

As we said earlier, the condensation products can be collected in several separate stages; as an example, a first stage may collect the denser tars and dioxins, while a second stage collects the acetic acid, water and intermediate products and a third stage gathers the benzol, methanol and the like.

At the outlet of the cooling battery 41 and in cooperation with a fan 43 providing cooling air there may be provided a final cooling 44 with water so as to get the gas temperature conditions required by the successive gas usage means. If this usage means is an internal combustion engine 15, the fuel gases pass on to a mixer 45, which mixes the gases suitably with incoming air 46 before sending them to the engine 15.

As we said before, the gases discharged by the engine or motor 15 are sent advantageously through the duct 14 to the pre-charging and drying silo 11.

Besides carbon monoxide there is formation of hydrogen in the furnace 13 owing to the moisture contained in the fuel products or owing to the addition of water sprayed by the sprayer 31 and evaporated and superheated in the combustion-supporting air fed to the gas producer 10. This occurrence is controlled by a suitable thermostat 47.

Discharge means 49, a worm for instance, are included at the bottom of the gas producer 10 to remove the ashes produced in the furnace 13 and may advantageously provide a free entry of air.

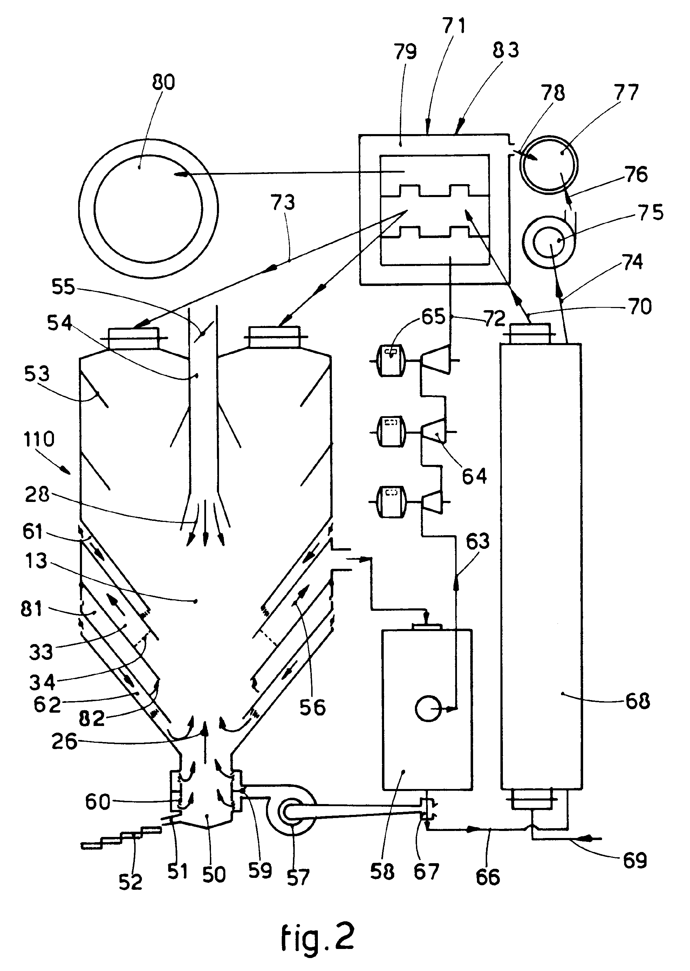

Fig.2 shows another embodiment of the invention, in which the gas producer 110 provides again combustion with a downward flame or flames 28 and a direct flame or flames 26.

This gas producer 110 is especially suitable for fuels of a solid urban waste type and includes at its base a cupola-furnace type device to provide final melting of the materials which cannot be gasified, such as slags of various metals, glass, etc.

The cupola furnace consists of a crucible 50 with a casting channel 51 that cooperates advantageously with a plurality of ingot moulds 52 arranged in series to collect the various molten materials separately according to their relative densities.

The gas producer 110 according to the invention includes, in the zone of charging the material to be gasified and carbonised, a plurality of suitably inclined and staggered sectors 53 so as to obtain a re-mixing of the material during its descent within the gas producer 110.

A partial support for that material is obtained at the same time so as not to burden too greatly the combustion zones of the furnace 13.

A central duct 54 to deliver air to the downward flame or flames 28 comprises at its inlet a regulating valve 55 to control the gasification conditions. This central duct 54 may be lined advantageously within with Perkins-type steam tubes so as to remove excessive heat in its lower end portion and to transfer that heat to the incoming air and towards the less hot upper zones.

Supplementary inlets 61 and 62 for combustion-supporting air are included respectively in the zone of the downward flame 28 and in the zone of the the direct flame 26 to provide for the severest operational conditions in the production of fuel gases.

A supplementary silo 81 controlled by a valve 82, for instance, is included and can store stocks of materials, such as coal or wooden scrap, to be introduced into the furnace 13 when extra calories are required to integrate the calories produced from the wastes so as to obtain final melting.

The fuel gases leave the furnace 13 through an outlet 56 and are drawn by an aspirator means 75 coordinated with the requirements of the crucible 50; the aspirator means 75 cooperates with a centrifugal fan 57 in fulfilling the requirements of the crucible 50; the aspirator means 75 and fan 57 are connected to a usage means that uses gases, a steam boiler 58 in this example.

The required flow of combustion-supporting air through an inlet 60 to the crucible 50 is regulated by a regulation valve 59. The air inlet 60 may equally well have independent means to aspirate and control the combustion-supporting air.

In Fig.2 a path 63 is used by steam leaving a boiler 58 and passing towards a battery of steam turbines 64 connected to a battery of alternators 65.

The fumes leaving the boiler 58 according to the arrow 66 pass advantageously over a means 67 to preheat air being sent to the crucible 50 and can then be sent to a first drier 68 that dries solid urban wastes.

The solid urban wastes are delivered according to the arrow 69 to the first drier 68, which is advantageously a rotary cylinder and in which the wastes receive heat from the fumes of the boiler 58; at the same time the dioxins and tars still present in those fumes are condensed on the wastes.

The wastes may be sent according to the arrow 70 to a second drier 71, in which they are further dried with a reduction of excess moisture and are advantageously re-mixed and heated by contact on chutes 83 made hot by suitable interspaces by means of the steam discharged according to the arrow 72 from the turbines 64.

The solid urban wastes go from the second drier 71 according to the arrow 73 to feed the gas producer 110, care being taken to prevent more air entering with the wastes than the amount useful for facilitating the distribution and subsequent carbonisation of the wastes.

The fumes leaving the first drier 68 according to the arrow 74 are aspirated by an aspirator means 75, a centrifugal fan for instance, in quantities corresponding to the actual requrement of the boiler 58. This fan 75 arranges to keep the whole plant under negative pressure and at the same time aspirates into the gas producer 110 the quantity of combustion-supporting air needed for the production of the required fuel gases.

Cooled fumes leaving the fan 75 according to the arrow 76 are discharged into a stack 77, into which is also discharged according to the arrow 78 the hot, moist exchange air from an outer recycling circuit 79 of the second drier 71.

In Fig.2 the reference 80 indicates a condenser of the discharged steam from the turbines 64 which has not been used in the second drier 71.

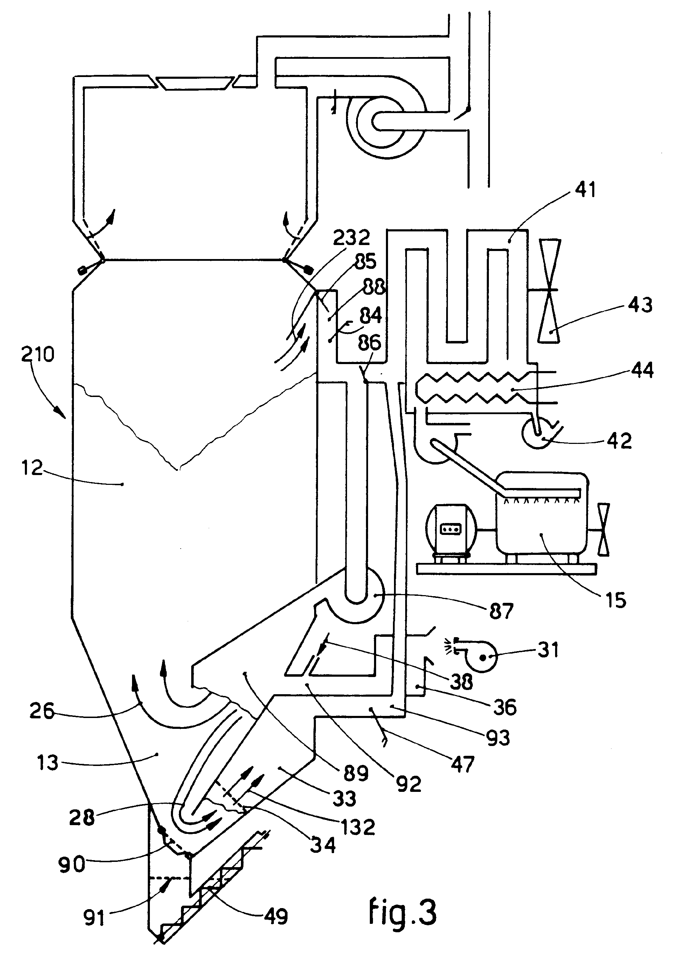

Fig.3 shows a variant of the invention in which the gas producer 210, while having many parts in common with the gas producer 10 of Fig.1, is different therefrom in that it has a zone 92 of immission of combustion-supporting air at a position in the furnace 13 between the position of the direct flame 26 and that of the downward flame 28.

The recovery of the fuel gases is located at two different positions in the gas producer 210, one position 132 in the lower part of the furnace 13 and the other 232 in the upper part of the carbonisation silo 12.

The result is that the positions of the two types of flame 26-28 are inverted; the direct flame 26 is directed from the centre of the furnace 13 upwards towards the distillation and carbonisation silo 12, while the downward flame 28 is directed from the centre of the furnace 13 towards the bottom of the gas producer 210.

In this way the direct flame 26 enhances the carbonisation action and the gaseous production of distillates and achieves also some cracking effect; this is an outcome of the fact that the heat of the fuel gas is used at the end of the direct flame 26 when the reducing action too is finishing and the distillates therefore cannot burn.

The result is that the fuel gases are aspirated from the gasification silo 12 by means of a duct 88 with a regulation valve 85 actuated by a thermostat 84 and are sent by means of a valve 86 to the usage means 15 or to another pre-selected usage means.

If, as in the example shown, the fuel gases have to be cooled in the cooling battery 41, a greater quantity of condensates is collected by the pump 42, with consequent possible commercial advantages.

By means of the valve 86 the gases containing distillates may be made to recirculate in the gas producer 210 by the aspirator 87 so that, their quantity being regulated suitably so as to obtain an adequate resulting cracking action, they are mixed with the combustion-supporting air and burn in a pre-combustion chamber 89 with a definitely oxidising combustion.

A Venturi tube may also be comprised instead of the aspirator 87 and will use combustion-supporting air entering from the conduit 92 and pre-heated in the heat exchanger 36, which employs hot gases in the discharge pipe 93.

This type of recirculation, with direct flame, of gases rich of distillates can be brought about advantageously in the gas producer 110 too of Fig.2 by placing recovery intakes below the inclined sectors 53.

The action of distillation and carbonisation in the high zone of the gas producer 110 is enhanced in this way, particularly so if air is not allowed to enter together with the combustible scrap and waste from the inlets of the gas producer.

The aspirated gases can be put back into circulation either by modulating the cracking at the air inlets 61 and also 62 or, in particular, if this is actuated instead of the addition of fuel material held in the supplementary silo 81.

In the gas producer 210 too of Fig.3 the combustion-supporting air can be moistened by the sprayer 31 actuated by the thermostat 47 positioned in the discharge pipe 93.

The mixture of fuel gases in the pre-combustion chamber 89, partly enriched with oxygen of the air entering from the heat exchanger 36, is aspirated into the furnace 13, thus determining the direct flame 26 and the downward flame 28. This mixture undergoes firstly a combustion and cracking action and thereafter a reducing action owing to the sudden scantiness or lack of oxygen.

In this way the quantity of gases which can be condensed in the cooling battery 41 is reduced drastically in the fuel gas leaving the furnace at the lower position 132. These condensable gases can be put back into the combustion cycle through the inlet 38 into the pre-combustion chamber 89 of the gases.

In this case the fuel gases intended for a usage means can be recovered from below the grill of the ashes and will exit only in the direction 132 with the methods cited earlier.

The reference 90 is borne by a vibratory grill employed to drop the ashes onto the discharge means 49, which is provided with a seal engagement to prevent the entry of air from the exterior,the seal in this case being a level of water 91.

## Claims

1. Apparatus to gasify solid fuels which gasifies low cost products such as wood wastes and chips, solid biomasses in general, tyres, peat, lignite, coal and other materials and solid urban wastes and which comprises a gas producer (10-110-210) including, in order from above downwards, a pre-charging silo (11), a carbonization or coking and gasification silo (12) and a furnace (13) and is characterized in that a direct flame (26) and a downward flame (28) are included in the furnace (13) of the gas producer (10-110-210) and are associated with one single source and one single immission of air (89), and in that there are included a first zone of aspiration (32-132-56) of the fuel gases which is associated with the downward flame (28), and a second zone of aspiration (232) of the fuel gases which is associated with the direct flame (26), and in that the first zone of aspiration (32-132-56) cooperates with a transfer chamber (33), the pre- charging silo (11) being associated with an interspace (20) for circulation of drying gases.

2. Apparatus as in Claim 1, in which the gas producer (10-110-210) comprises at its base means (50) to melt materials which cannot be gasified.

3. Apparatus as in Claim 1 or 2, in which static means (53) to re-mix the descending material are included within the gas producer (10-110-210).

4. Apparatus as in any claim hereinbefore, in which the re-mixing means (53) are positioned inclined and staggered in relation to each other within the gas producer (10-110-210).

5. Apparatus as in any claim hereinbefore, which comprises means (31) to moisten the combustion-supporting air entering the gas producer (10-110-210).

6. Apparatus as in any claim hereinbefore, in which heat exchanger means (36) to transmit heat from the fuel gases leaving the gas producer (10-110-210) to the combustion-supporting air entering the gas producer (10-110-210) are included at least at the outlet of the transfer chamber (33).

7. Apparatus as in any claim hereinbefore, in which the transfer chamber (33) through which the fuel gases leaving (32) the furnace (13) pass includes at least one heat-exchange wall (35) in common with the gasification silo (12).

8. Apparatus as in any claim hereinbefore, in which grating means (34) are positioned on the outlet (32-132-56) of the fuel gases from the furnace (13).

9. Apparatus as in any claim hereinbefore, which comprises means (37) to collect and send to the zone of the furnace (13) the products condensed in the heat exchanger (36).

10. Apparatus as in any claim hereinbefore, in which means (38-27) to send the condensed products to and to mix them with, pre-heated combustion-supporting air are included.

11. Apparatus as in any claim hereinbefore, which comprises means (41-44) to cool the fuel gases discharged from the gas producer (10-210).

12. Apparatus as in any claim hereinbefore, which comprises means (42) to collect and send into the zone of the furnace (13) the products condensed by the cooling means (41-44).

13. Apparatus as in any claim hereinbefore, in which melting means (50) of the gas producer (110) are connected to ingot mould means (52).

14. Apparatus as in any claim hereinbefore, which comprises means (54) to deliver combustion-supporting air which are lined with steam tubes.

15. Apparatus as in any claim hereinbefore, which comprises supplementary means (61-62) for the introduction of combustion-supporting air.

16. Apparatus as in any claim hereinbefore, which comprises supplementary storage means (81-82).

17. Apparatus as in any claim hereinbefore, which comprises fan means (57) linked to the melting means (50) and to a means (67) that uses the heat of the combustion gases leaving a boiler (58).

18. Apparatus as in any claim hereinbefore, in which the gas producer (110) is connected to outside means (68-71) that dry the solid urban wastes.

19. Apparatus as in any claim hereinbefore, in which the drier means (68-71) employ fluids discharged (66-72) from the means (58-64) that use the fuel gases leaving the gas producer (110).

20. Apparatus as in any claim hereinbefore, in which the drier means (71) are equipped with chutes (83) to re-mix and heat the wastes by contact, the chutes (83) being heated by interspaces fed with steam discharged in the direction (72) from turbines (64).

21. Apparatus as in any claim hereinbefore, in which means (49) that discharge ashes comprise seal engagement means (91) to prevent entry of air from the exterior into the gas producer (210).

22. Apparatus as in any claim hereinbefore, which comprises re-circulation means (86) to send to the furnace (13) the gases containing distillates and located in the upper part of the gas producer (10-110-210).

## Patentansprüche

1. Vorrichtung zum Vergasen fester Brennstoffe, die Billigprodukte vergast, wie Holzabfälle und Holzschnitzel, feste Biomassen im allgemeinen, Reifen, Torf, Lignit, Kohle und andere Materialien sowie feste städtische Abfälle, mit einem Gaserzeuger (10, 110, 210), der in Reihenfolge von oben nach unten einen Vorbeladungssilo (11), einen Verkohlungs- oder Verkokungs- und Vergasungssilo (12) und einen Ofen (13) aufweist, **dadurch gekennzeichnet**, daß im Ofen (13) des Gaserzeugers (10, 110, 210) eine Direktflamme (26) und eine Abwärtsflamme (28) eingeschlossen sind, denen eine einzige Quelle und eine einzige Abgabe von Luft (89) zugeordnet ist, und daß eine erste Saugzone (32, 132, 56) für die Brenngase vorgesehen ist, die der Abwärtsflamme (28) zugeordnet ist, sowie ferner eine zweite Saugzone (232) für die Brenngase vorgesehen ist, die der Direktflamme (26) zugeordnet ist, wobei die erste Saugzone (32, 132, 56) mit einer Übergangskammer (33) zusammenarbeitet und der Vorbeladungssilo (11) mit einem Zwischenraum (20) für die Zirkulation von trocknenden Gasen ausgestattet ist.

2. Vorrichtung nach Anspruch 1, bei der der Gaserzeuger (10, 110, 210) an seiner Basis Mittel (50) zum Schmelzen von nicht zu vergasenden Materialien aufweist.

3. Vorrichtung nach Anspruch 1 oder 2, bei der im Gaserzeuger (10, 110, 210) stationäre Organe (53) zum Mischen des abrutschenden Materials angeordnet sind.

4. Vorrichtung nach einem der vorstehenden Ansprüche, bei der die Mischorgane (53) geneigt und in Bezug aufeinander gestaffelt im Gaserzeuger (10, 110, 210) angeordnet sind.

5. Vorrichtung nach einem der vorstehenden Ansprüche, bei der im Gaserzeuger (10, 110, 210) Organe (31) zur Befeuchtung der in den Gaserzeuger eintretenden Verbrennungsluft angeordnet sind.

6. Vorrichtung nach einem der vorstehenden Ansprüche, bei der mindestens beim Auslaß der Übergangskammer (33) Wärmetauscher (36) zur Wärmeübertragung von den den Gaserzeuger (10, 110, 210) verlassenden Brenngasen auf die in den Gaserzeuger (10, 110, 210) eintretende Verbrennungsluft vorgesehen sind.

7. Vorrichtung nach einem der vorstehenden Ansprüche, bei der die Übergangskammer (33), durch die die Brenngase (32) den Ofen (13) verlassen, mindestens eine wärmeaustauschende Wand (35) aufweist, die in Verbindung mit dem Vergasungssilo (12) steht.

8. Vorrichtung nach einem der vorstehenden Ansprüche, bei der am Auslaß (32, 132, 56) der Brenngase aus dem Ofen (13) Gitter (34) angeordnet sind.

9. Vorrichtung nach einem der vorstehenden Ansprüche, bei der Organe (37) vorgesehen sind, die die kondensierten Produkte aus dem Wärmetauscher (36) sammeln und in den Bereich des Ofens (13) fördern.

10. Vorrichtung nach einem der vorstehenden Ansprüche, bei der Organe (38, 27) vorgesehen sind, die die kondensierten Produkte zur vorgeheizten Verbrennungsluft fördern und mit dieser mischen.

11. Vorrichtung nach einem der vorstehenden Ansprüche, bei der Organe (41, 44) zur Kühlung der vom Gaserzeuger (10, 210) kommenden Brenngase vorgesehen sind.

12. Vorrichtung nach einem der vorstehenden Ansprüche, bei der Organe (42) vorgesehen sind, die die durch die Kühlorgane (41, 44) kondensierten Produkte sammeln und in den Bereich des Ofens (13) fördern.

13. Vorrichtung nach einem der vorstehenden Ansprüche, bei der Schmelzorgane (50) des Gaserzeugers (110) mit Ingots bzw. Formen (52) verbunden sind.

14. Vorrichtung nach einem der vorstehenden Ansprüche, bei der Organe (54) zur Lieferung von Verbrennungsluft mit Dampfrohren ausgekleidet sind.

15. Vorrichtung nach einem der vorstehenden Ansprüche, bei der zusätzliche Organe (61, 62) für die Einführung von Verbrennungsluft vorgesehen sind.

16. Vorrichtung nach einem der vorstehenden Ansprüche, die zusätzliche Lagerorgane (81, 82) aufweist.

17. Vorrichtung nach einem der vorstehenden Ansprüche, bei der ein Ventilator (57) an die Schmelzorgane (50) und an Organe (67) zur Verwendung der Wärme der einen Kessel (58) verlassenden Brenngase angeschlossen ist.

18. Vorrichtung nach einem der vorstehenden Ansprüche, bei der der Gaserzeuger (110) mit außerhalb angeordneten Organen (68, 71) zum Trocknen von festem städtischen Müll verbunden ist.

19. Vorrichtung nach einem der vorstehenden Ansprüche, bei der die Trockenorgane (68, 71) ein Fluidum verwenden, das von jenen Organen (58, 64) abströmt (66, 72), die die den Gaserzeuger (110) verlassenden Brenngase verwenden.

20. Vorrichtung nach einem der vorstehenden Ansprüche, bei der die Trockenorgane (71) mit Rinnen (83) ausgestattet sind, die den Müll mischen und durch Berührung erwärmen, wobei die Rinnen (83) durch Zwischenräume beheizt sind, die mit Dampf von Turbinen (64) beaufschlagt werden.

21. Vorrichtung nach einem der vorstehenden Ansprüche, bei der Organe (49) zum Austragen von Asche Dichtungen (91) zur Verhinderung eines Lufteintritts von außen in den Gaserzeuger (210) aufweisen.

22. Vorrichtung nach einem der vorstehenden Ansprüche, die Organe (86) zur emeuten Zirkulation aufweist, die im oberen Teil des Gaserzeugers (10, 110, 210) angeordnet sind und zum Ofen (13) Gase schicken, die Destillate enthalten.

## Revendications

1. Appareil pour gazéifier des combustibles solides qui gazéifie des produits de bas de gamme tels que des déchets de bois et des copeaux, des biomasses solides en général, des pneus, de la tourbe, de la lignite, du charbon et d'autres matières ainsi que des déchets urbains solides et qui comprend un gazogène (10-110-210) comprenant, dans l'ordre et de haut en bas, un silo de préchargement (11), un silo de carbonisation ou de cokéfaction et de gazéification (12) et un four (13) et est caractérisé en ce qu'une flamme directe 26 et une flamme dirigée vers le bas (28) sont prévues dans le four (13) du gazogène (10-110-210) et sont associées à une seule source et à une seule entrée d'air (89), et en ce que sont prévues une première zone d'aspiration (32-132-56) des gaz combustibles qui est associée à la flamme dirigée vers le bas (28) et une seconde zone d'aspiration (232) des gaz combustibles qui est associée à la flamme directe (26) et en ce que la première zone d'aspiration (32-132-56) coopère avec une chambre de transfert (33), le silo de préchargement (11) étant associé à un espace intermédiaire (20) pour la circulation de gaz de séchage.

2. Appareil suivant la revendication 1, dans lequel le gazogène (10-110-210) comprend, à sa base, des moyens (50) pour faire fondre des matières qui ne peuvent pas être gazéifiées.

3. Appareil suivant la revendication 1 ou 2, dans lequel des moyens statiques (53) pour remélanger la matière descendante sont inclus dans le gazogène (10-110-210).

4. Appareil suivant l'une quelconque des revendications précédentes, dans lequel les moyens de remélange (53) sont installés, inclinés et décalés en quinconce les uns par rapport aux autres, dans le gazogène (10-110-210).

5. Appareil suivant l'une quelconque des revendications précédentes, qui comprend des moyens (31) pour humidifier l'air comburant pénétrant dans le gazogène (10-110-210).

6. Appareil suivant l'une quelconque des revendications précédentes, dans lequel des moyens échangeurs de chaleur (36) destinés à transmettre de la chaleur des gaz combustibles sortant du gazogène (10-110-210) à l'air comburant entrant dans le gazogène (10-110-210) sont prévus au moins à la sortie de la chambre de transfert (33).

7. Appareil suivant l'une quelconque des revendications précédentes, dans lequel la chambre de transfert (33), que les gaz combustibles s'échappant (32) du four (13) traversent, comprend au moins une paroi d'échange de chaleur (35) commune au silo de gazéification (12).

8. Appareil suivant l'une quelconque des revendications précédentes, dans lequel des grilles (34) sont installées sur la sortie (32-132-56) des gaz combustibles du four (13).

9. Appareil suivant l'une quelconque des revendications précédentes, qui comprend des moyens (37) pour recueillir et envoyer vers la zone du four (13) les produits condensés dans l'échangeur de chaleur (36).

10. Appareil suivant l'une quelconque des revendications précédentes, dans lequel des moyens (38-27) destinés à envoyer des produits condensés vers de l'air comburant préchauffé et à les mélanger avec celui-ci sont prévus.

11. Appareil suivant l'une quelconque des revendications précédentes, qui comprend des moyens (41-44) pour refroidir les gaz combustibles s'échappant-du gazogène (10-210).

12. Appareil suivant l'une quelconque des revendications précédentes, qui comprend des moyens (42) pour recueillir et envoyer dans la zone du four (13) les produits condensés par les moyens de refroidissement (41-44).

13. Appareil suivant l'une quelconque des revendications précédentes, dans lequel des moyens de fusion (50) du gazogène (110) sont raccordés à des lingotières (52).

14. Appareil suivant l'une quelconque des revendications précédentes, qui comprend également des moyens (54) pour fournir de l'air comburant qui sont garnis de tubes de vapeur.

15. Appareil suivant l'une quelconque des revendications précédentes, qui comprend des moyens supplémentaires (61-62) pour l'introduction de l'air comburant.

16. Appareil suivant l'une quelconque des revendications précédentes, qui comprend des moyens de stockage supplémentaires (81-82).

17. Appareil suivant l'une quelconque des revendications précédentes, qui comprend un ventilateur (57) relié aux moyens de fusion (50) et à un dispositif (67) qui utilise la chaleur des gaz de combustion sortant d'une chaudière (58).

18. Appareil suivant l'une quelconque des revendications précédentes, dans lequel le gazogène 110 est raccordé à des moyens extérieurs (68-71) qui sèchent les déchets urbains solides.

19. Appareil suivant l'une quelconque des revendications précédentes, dans lequel les sécheurs (68-71) utilisent des fluides s'échappant (66-72) des dispositifs (58-64) qui utilisent les gaz combustibles sortant du gazogène (110).

20. Appareil suivant l'une quelconque des revendications précédentes, dans lequel les sécheurs (71) sont équipés de goulottes (83) pour remélanger et chauffer les déchets par contact, les goulottes (83) étant chauffées par des espaces intermédiaires alimentés de vapeur d'eau s'échappant dans le sens de la flèche (72) de turbines (64).

21. Appareil suivant l'une quelconque des revendications précédentes, caractérisé en ce que les moyens (49) qui évacuent les cendres comprennent une garde étanche (91) pour empêcher toute entrée d'air de l'extérieur dans le gazogène (210).

22. Appareil suivant l'une quelconque des revendications précédentes, qui comprend des moyens de recyclage (86) installés dans la partie supérieure du gazogène (10-110-210), et destinés à envoyer vers le four (13) les gaz contenant des distillats.
